# EUROPEAN PATENT SPECIFICATION

(11) **EP 3 406 153 B1**
(45) Date of publication and mention of the grant of the patent: **11.03.2020**
(21) Application number: 18173678.6
(22) Date of filing: 22.05.2018
(51) Int. Cl.: A42B 3/04

(54) **HELMET**
HELM
CASQUE

(30) Priority: 25.05.2017 IT 201700057129
(43) Date of publication of application: 28.11.2018
(73) Proprietor: Gallizzi, Ivan, 14100 Asti (AT) (IT)
(72) Inventor: Gallizzi, Ivan, 14100 Asti (AT) (IT)
(74) Representative: Villa, Livia

(56) References cited:
- DE-A1-102009 036 283
- US-A1- 2015 374 061
- US-A1- 2016 113 345
- US-A1- 2016 355 126

## Description

### FIELD OF INNOVATION

The present invention relates to a helmet.

In particular, it refers to a motorcycle helmet.

### BACKGROUND ART

As it is known there are 8,600,000 two-wheeled motor vehicles in Italy, comprising motorcycles and mopeds (without considering pushbikes then).

Unfortunately, motorcyclists are often involved in accidents that can also be fatal. In most cases, accidents are caused by negligence on the driver's part, lack of knowledge or infringement of the highway code, imprudence, and lack of attention (recently also due to reckless use of mobile phones).

Over the years, these factors have led to an increase in public health spending and a continuous increase in insurance premiums.

In many cases the dynamics of the accident are unclear and therefore establishing liability is complex.

Many times then, in the case of motorcyclists, it appears that, although worn, the helmet has not been fastened properly.

DE 102009036283-A1 describes a helmet with an integrated camcorder, which is activated by opening of the visor.

### SUMMARY

The object of the present invention is to provide a helmet which sheds light on the dynamics of most accidents, especially those involving motorcyclists.

This and other objects are achieved by means of a helmet according to the technical teachings of the claims annexed hereto.

Advantageously, the helmet according to the present invention allows the dynamics of the accident to be completely reconstructed in an unambiguous manner, ascertaining also whether or not the helmet worn was properly fastened.

### BRIEF DESCRIPTION OF THE FIGURES

Further characteristics and advantages of the invention will become clearer in the description of a preferred but not exclusive embodiment of the helmet, illustrated - by way of a non-limiting example - in the drawings annexed hereto, in which:
Figure 1 is a simplified perspective view of a helmet according to the present invention; and
Figure 2 is a view of a simplified electrical circuit integrated into the helmet in Figure 1.

### DETAILED DESCRIPTION OF THE INNOVATION

With reference to the figures stated, reference number 1 is used to denote, as a whole, a helmet, in particular for motorcyclists.

The helmet 1 comprises an external shell 2 to at least partially protect the head of a user, the said shell being made of an essentially rigid, shock-resistant material.

The shell 2 may feature padding inside, which is usually made of an absorbent material, for example foamed polystyrene.

The inside of the padding may feature a soft lining (not shown) which may include several parts, to make the helmet adaptable to multiple sizes and use thereof more comfortable.

The inner lining may be provided only on some areas of the padding and may be made of a breathable fabric coupled with foam or other soft and comfortable materials.

Inside the helmet then, there may be removable cheek pads 11 present, to make use of the helmet more comfortable.

There may be different accessories and functional parts, such as a movable eye-shade 4, air vents 5, and above all a throat-lash 6 secured (in a conventional manner) to the shell 2, which - in the case described - may also feature a throat-lash guard 3 made as a single piece (but which may also not be featured).

When the two parts comprising the throat-lash 6 are mutually secured (for example by means of a quick release fastener 7 or other known fastening device), the helmet is perfectly fastened and secured to the user's head.

According to the present invention, the helmet features an integrated camcorder 8. The camcorder 8 is provided with at least one lens 9, arranged to view at least a part of the surrounding environment.

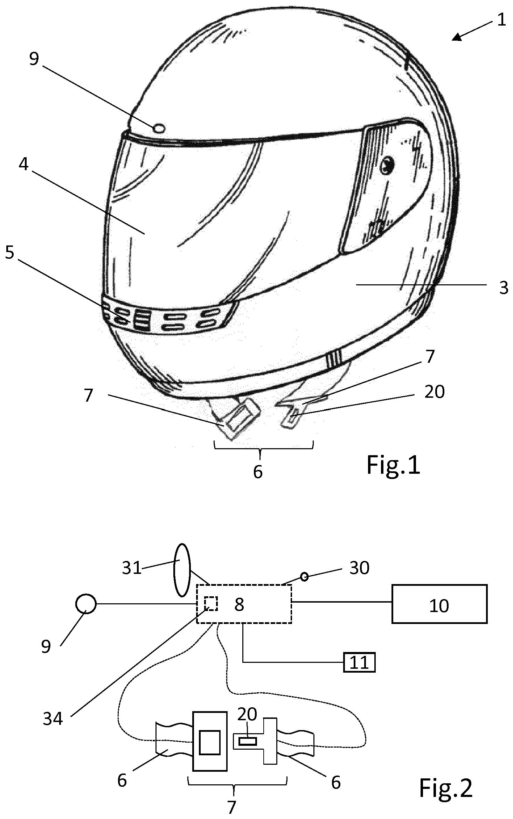

A possible arrangement of the lens 9 may be that shown in figure 1. The lens may be positioned on the front of the helmet, above the eye-shade 4 (if present), in an essentially central position.

In the example, the camcorder lens is positioned on the surface of the shell, preferably in such a way as to be partially or totally hidden, given the compact dimensions thereof.

Obviously, the lens 9 may be positioned in other areas of the helmet, or several lenses may be featured which view different parts of the surrounding environment. For example, one lens may also be featured on the rear of the helmet, or there may be one or more lenses in a lateral position, all of which record onto the same camcorder or onto multiple camcorders integrated into the helmet.

A further possible position of the lens 9 may be on the rear of the eye-shade (when lowered), for example laterally, in the padding or the lateral lining of the compartment covered by the eye-shade.

The camcorder 8 is also equipped with a switch for recording activation/deactivation.

Specifically, the switch is positioned on the helmet so that recording is activated when the user puts on the helmet.

One possible type of switch may include a proximity switch, a capacitive sensor, and a pressure sensor.

The switch 20 is integrated into a throat-lash 6, and when the throat-lash is properly fastened, the switch 20 activates camcorder recording.

Thus, camcorder recording is activated solely when the helmet is properly fastened. Thus, the recording produced by the camcorder will only be available when the helmet has been properly fastened and worn, therefore, in compliance with regulations in force.

Figure 2 shows, schematically, some of the components integrated into the helmet. For example, a battery 10 may be provided for powering the camcorder. The battery can be charged up using a standard connector 11 (for example, a USB or MICRO USB connector).

There may also be a signal light 30 or LED showing the recording activation status. The signal light 30 may be placed in a point on the helmet which is within the user's field of vision when wearing the helmet. For example, the colour of the signal light 30 may indicate a recording deactivation status, a non-recording status, a low battery status, or a full recording memory status.

Advantageously, the camcorder records onto a removable storage medium 34 (for example an SD or micro SD card) on a continuous loop. In this case, once the recording space is full, the camcorder automatically deletes some of the older recordings to make room for the new ones, thereby ensuring continuous operation without breaks in the recording.

Optionally the camcorder may also include a microphone 31 for recording sound, possibly positioned facing the shell or the exterior thereof.

In the embodiment described, some or all of the components shown in the diagram in Figure 2, but, more specifically, at least the camcorder 8 and the battery 10 are housed in compartments or recesses specifically provided in the padding or in the lining of the helmet. This makes the invention essentially indistinguishable from a normal helmet, even if viewed from the inside.

From the above, it can be deduced that the invention is also related to a method for activating a camcorder integrated into a helmet, wherein the camcorder recording is activated automatically when the helmet is put on by a user.

The camcorder recording is activated when a user fastens a helmet throat-lash.

It is evident from the above that the invention is particularly useful in the case of a motorcycle helmet.

Nevertheless, since the system is very simple, it is adaptable to all types of helmets (both full face and the open 'jet' types) with different variants also depending on the types of fastenings and the positioning of the camcorder.

Variants may also be obtained for the type of closure of the electrical circuit of the switch 20 integrated into the throat-lash 6 or, rather, in the fastening 7 thereof.

The switch 20 may be triggered to activate the camcorder 8 when a part of the fastener reaches the stroke end, thereby coming into contact with one of the moving parts thereof. Or the switch may be integrated into the fastening 7, directly using, for example, the metal parts thereof, which act as a 'jumper' to close the contact and activate the recording when the fastening is secured tightly.

Obviously, nickel-plated aluminium fastenings, magnetic switches, and other switch solutions known to a person skilled in the art may be used.

Maintenance for the helmet according to the present invention is particularly simple and involves only charging the battery, in the same way as we do each day for our mobile phones.

The helmet according to the invention may be adapted for various scenarios. Just think of how many motorcyclists there are in the world and of the possibility of making use of a helmet according to the present invention compulsory, since it would, in actual fact, constitute a 'black box' for each user. The benefits would be notable, especially in terms of public health (since motorcyclists would be encouraged to fasten their helmet) and insurance (discounts could be provided for those who use the helmet).

Naturally, use of this invention may be extended to helmets used in many areas, such as sports (skiing, cycling, climbing, etc.), in the workplace (construction, safety, etc.) and in the state/government field (police forces, army, firemen, etc.)
Various embodiments of innovation have been disclosed herein, but further embodiments may also be conceived, but the scope of protection is defined by the claims.

## Claims

1. A helmet (1) comprising a shell (2) to at least partially protect the head of a user, and a camcorder (8) integrated in the helmet, provided with at least one lens (9) arranged to frame at least a portion of the ambient around the helm, the camcorder being provided with a recording activation/interruption switch (20), wherein said switch is positioned on the helmet so as to activate the recording when the helmet is worn by the user, and to deactivate the recording when the helmet is unworn by the user, **characterized in that** the switch (20) is integrated into a throat-lash (6), and when the throat-lash (6) is properly fastened, the switch activates the recording, while when the throat-lash (6) is unfastened, the registration is stopped.

2. A helmet according to claim 1, wherein the camcorder (8) is powered by a battery integrated in the helmet.

3. A helmet according to one or more of the preceding claims, wherein the camcorder (8) comprises a registration microphone (31).

4. A helmet according to one or more of the preceding claims, wherein the camcorder (8) has an optionally removable storage media (34) on which it records continuous loop images.

5. A helmet according to one or more of the preceding claims, wherein at least one lens (9) of the camcorder is positioned on the surface of the shell (2), preferably in such a way as to be partially or totally hidden.

6. A helmet according to one or more of the preceding claims, wherein the lens (9) is positioned behind an eye-shade (4) when it is lowered.

7. A helmet according to one or more of the preceding claims, wherein the camcorder (8) and the battery (10) are housed in a compartment provided in the inner liner or in the inner covering of the helmet.

8. Method for activating a camcorder (8) integrated in a helmet (1) according to one or more of the preceding claims, wherein the recording of the camcorder is automatically activated when the helmet is worn by a user, **characterized in that** the recording of the camera is activated when a user fastens a helmet throat-lash (6).

## Patentansprüche

1. Helm (1), umfassend eine Schale (2) zumindest zum teilweisen Schutz des Kopfes eines Benutzers und einen in den Helm integrierten Camcorder (8), der mit mindestens eine Linse (9) versehen ist, die so angeordnet ist, dass sie mindestens einen Teil der Umgebung um den Helm erfasst, wobei der Camcorder mit einem Schalter (20) zur Aktivierung/Unterbrechung der Aufzeichnung versehen ist, wobei der Schalter so an dem Helm positioniert ist, dass er die Aufzeichnung aktiviert, wenn der Helm von dem Benutzer getragen wird, und dass er die Aufzeichnung deaktiviert, wenn der Helm nicht von dem Benutzer getragen wird, **dadurch gekennzeichnet, dass** der Schalter (20) in einen Kinnriemen (6) integriert ist, und wobei, wenn der Kinnriemen (6) ordnungsgemäß geschlossen wird, der Schalter die Aufzeichnung aktiviert, während die Aufzeichnung unterbrochen wird, wenn der Kinnriemen (6) gelöst wird.

2. Helm nach Anspruch 1, wobei der Camcorder (8) durch eine in den Helm integrierte Batterie betrieben wird.

3. Helm nach einem oder mehreren der vorstehenden Ansprüche, wobei der Camcorder (8) ein Aufnahmemikrofon (31) umfasst.

4. Helm nach einem oder mehreren der vorstehenden Ansprüche, wobei der Camcorder (8) ein optionales entfernbares Speichermedium (34) aufweist, auf dem er Endlosschleifenbilder aufzeichnet.

5. Helm nach einem oder mehreren der vorstehenden Ansprüche, wobei die mindestens eine Linse (9) des Camcorders an der Oberfläche der Schale (2) positioniert ist, vorzugsweise so, dass sie teilweise oder vollständig verdeckt ist.

6. Helm nach einem oder mehreren der vorstehenden Ansprüche, wobei die Linse (9) hinter einem Visier (4) positioniert ist, wenn dieses ausgefahren ist.

7. Helm nach einem oder mehreren der vorstehenden Ansprüche, wobei sich der Camcorder (8) und die Batterie (10) in einem Fach befinden, das in dem Innenfutter oder in der Innenpolsterung des Helms bereitgestellt ist.

8. Verfahren zur Aktivierung eines in einem Helm (1) nach einem oder mehreren der vorstehenden Ansprüche integrierten Camcorders (8), wobei die Aufzeichnung des Camcorders automatisch aktiviert wird, wenn der Helm von einem Benutzer getragen wird, **dadurch gekennzeichnet, dass** die Aufzeichnung durch die Kamera aktiviert wird, wenn ein Benutzer einen Kinnriemen (6) des Helms schließt.

## Revendications

1. Casque (1) comprenant une coque (2) pour protéger au moins partiellement la tête d'un utilisateur, et un caméscope (8) intégré dans le casque, muni d'au moins un objectif (9) conçu pour cadrer au moins une partie de l'environnement autour du casque, le caméscope étant muni d'un commutateur d'activation/interruption d'enregistrement (20), ledit commutateur étant positionné sur le casque de sorte à activer l'enregistrement lorsque le casque est porté par l'utilisateur, et à désactiver l'enregistrement lorsque le casque n'est pas porté par l'utilisateur, **caractérisé en ce que** le commutateur (20) est intégré dans une jugulaire (6), et lorsque la jugulaire (6) est correctement fixée, le commutateur active l'enregistrement, tandis que lorsque la jugulaire (6) n'est pas fixée, l'enregistrement est arrêté.

2. Casque selon la revendication 1, le caméscope (8) étant alimenté par une batterie intégrée dans le casque.

3. Casque selon une ou plusieurs des revendications précédentes, le caméscope (8) comprenant un microphone d'enregistrement (31).

4. Casque selon une ou plusieurs des revendications précédentes, le caméscope (8) ayant un support de stockage (34) éventuellement amovible sur lequel il enregistre des images en boucle continue.

5. Casque selon une ou plusieurs des revendications précédentes, au moins un objectif (9) du caméscope étant positionné sur la surface de la coque (2), de préférence de sorte à être partiellement ou totalement cachée.

6. Casque selon une ou plusieurs des revendications précédentes, l'objectif (9) étant positionné derrière une visière (4) lorsqu'elle est abaissée.

7. Casque selon une ou plusieurs des revendications précédentes, le caméscope (8) et la batterie (10) étant logés dans un compartiment situé dans le revêtement intérieur ou dans la couverture intérieure du casque.

8. Procédé d'activation d'un caméscope (8) intégré dans un casque (1) selon une ou plusieurs des revendications précédentes, l'enregistrement du caméscope étant automatiquement activé lorsque le casque est porté par un utilisateur, **caractérisé en ce que** l'enregistrement de la caméra est activé lorsqu'un utilisateur fixe une jugulaire (6) de casque.
